# FASCICULE DE BREVET EUROPEEN

(11) **EP 1 724 604 B1**
(45) Date de publication et mention de la délivrance du brevet: **30.07.2008**
(21) Numéro de dépôt: 05104207.5
(22) Date de dépôt: 18.05.2005
(51) Int. Cl.: G01S 5/14, G01C 21/20, G04G 9/00

(54) **Dispositif et procédé pour déterminer la position avec un récepteur GPS et une boussole**
Vorrichtung und Verfahren um die Position mit einem GPS-Empfänger und einem Kompass zu bestimmen
Apparatus and method for position determination with a GPS receiver and a compass

(43) Date de publication de la demande: 22.11.2006
(73) Titulaire: ASULAB S.A., 2074 Marin (CH)
(72) Inventeur: Gauthey, Darryl, 1400 Yverdon (CH); Montheard, Anne, 1312 Eclépens (CH)
(74) Mandataire: Ravenel, Thierry Gérard Louis

(56) Documents cités:
- EP-A- 0 871 096
- EP-A- 1 170 597
- WO-A-92/21990
- WO-A-20/05017456
- US-A- 5 790 477
- US-A- 6 032 108

## Description

L'invention concerne un dispositif électronique portable, qui comprend un récepteur de signaux radiofréquences et une boussole magnétique. Le dispositif est susceptible d'être porté au poignet d'un utilisateur, tel qu'une montre-bracelet, de manière à lui fournir des informations de direction ou de position. Le récepteur comprend des moyens de réception et de mise en forme des signaux radiofréquences provenant de satellites, et plusieurs canaux de corrélation pour la recherche et la poursuite de plusieurs satellites visibles. Le dispositif comprend également une unité de traitement de données à microprocesseur pour traiter des données fournies par le récepteur et la boussole, et des moyens de mémorisation. Des données d'almanach et d'éphémérides relatives aux satellites sont mémorisées dans les moyens de mémorisation.

L'invention concerne également un procédé de détermination de position à l'aide d'un dispositif électronique porté au poignet d'un utilisateur.

Le récepteur de signaux radiofréquences du dispositif électronique peut être utilisé par exemple dans un système de navigation par satellites de type GLONASS ou GALILEO ou GPS.

Le récepteur de signaux radiofréquences du dispositif électronique peut être du type GPS, dans lequel les moyens de réception et de mise en forme des signaux radiofréquences produisent des signaux intermédiaires, qui sont convertis en fréquence, pour un étage de corrélation. Cet étage de corrélation est composé de plusieurs canaux de corrélation pour recevoir les signaux intermédiaires afin de les corréler avec des répliques de la fréquence porteuse et de codes spécifiques de satellites à chercher et à poursuivre. De préférence, le récepteur peut comprendre un nombre de canaux de corrélation plus important que le nombre de satellites visibles pour le dispositif électronique porté par un utilisateur à la surface de la Terre.

Dans le cas d'un système GPS, tout récepteur de signaux radiofréquences peut recevoir des signaux GPS provenant de satellites en orbite. La distance au sol depuis le récepteur et un satellite visible peut être entre 20'000 km, lorsqu'un de ces satellites se trouve au Zénith, et 26'000 km, lorsqu'un de ces satellites se trouve en un point de la tangente avec la surface de la Terre, c'est-à-dire à l'horizon.

Actuellement, 30 satellites sont placés en orbite à une distance proche de 20'200 Km au-dessus de la surface de la Terre sur 6 plans orbitaux inclinés chacun de 55° par rapport à l'équateur. Le temps mis par un satellite pour accomplir une rotation complète en orbite afin de se retrouver au même point au-dessus de la Terre est environ de 12h. La répartition des satellites en orbite permet à un récepteur GPS terrestre de recevoir les signaux GPS par exemple d'au moins quatre satellites visibles pour déterminer sa position, sa vitesse et l'heure locale par exemple. Le message GPS des signaux GPS contient les données d'éphémérides et d'almanachs utiles notamment pour le calcul de la position en X, Y et Z, de la vitesse et de l'heure locale.

Toutes ces données connues d'éphémérides et d'almanachs sont mémorisées dans les moyens de mémorisation du dispositif électronique portable. De cette manière à l'aide d'une position approximative connue du récepteur, il est possible de configurer ledit récepteur pour une recherche et poursuite de satellites censés être visibles à l'instant de la recherche.

Dans le cas d'un système de navigation, il est connu d'utiliser une boussole en plus du récepteur de signaux radiofréquences de manière à fournir une information sur le but à atteindre à l'utilisateur du dispositif portable.

On peut citer à ce titre le brevet US 5,790,477, qui décrit une montre munie d'un récepteur GPS, ainsi que d'une boussole magnétique. Dans cette montre, des coordonnées de points d'un lieu géographique à atteindre doivent être introduites et mémorisées. Afin de faciliter des opérations de calcul de la direction à suivre, la boussole fournit des informations relatives principalement au Nord géographique. Après traitement des signaux GPS et de l'information de la boussole, un dispositif d'affichage de la montre indique la direction à suivre pour atteindre le but désiré.

Dans ce cas, la boussole n'est utilisée que pour permettre à la montre de donner une information à l'utilisateur sur la direction à emprunter pour se diriger au lieu géographique à atteindre.

Dans la demande de brevet international WO 92/21990, il est décrit un dispositif électronique portable en tant qu'indicateur d'une direction d'un système de navigation. Pour ce faire, le dispositif comprend un récepteur GPS, ainsi qu'une boussole magnétique. Le récepteur GPS et la boussole génèrent des signaux qui sont traités par une unité de traitement afin de fournir un signal de direction. Un écran d'affichage du dispositif portable permet d'afficher une flèche d'indication d'une direction à suivre pour atteindre un lieu géographique sélectionné.

La boussole magnétique de ce dispositif électronique portable n'a pas d'autres fonctions que de fournir une information à l'unité de traitement pour pouvoir afficher sur l'écran la direction du lieu géographique à atteindre.

Comme le dispositif électronique de la présente invention est porté au poignet d'un utilisateur, le corps de l'utilisateur peut constituer un obstacle à la réception des signaux radiofréquences de certains satellites visibles en position de lecture du dispositif. Ceci peut constituer un inconvénient si une grande partie des satellites visibles à chercher se trouve masqués par le corps de l'utilisateur.

L'invention a donc pour but principal de fournir un dispositif électronique portable muni d'un récepteur de signaux radiofréquences et d'une boussole pour assister ledit récepteur afin de pallier les inconvénients cités ci-dessus.

A cet effet, l'invention concerne un dispositif électronique portable cité ci-devant, qui comprend les caractéristiques mentionnées dans la revendication 1.

Des formes d'exécution avantageuses sont définies dans les revendications dépendantes 2 à 8.

Un avantage du dispositif électronique porté au poignet d'un utilisateur selon l'invention réside dans le fait qu'il permet de fournir à l'utilisateur une indication sur une orientation préférée pour une meilleure recherche de satellites visibles en position de lecture du dispositif par rapport à son corps. En se tournant d'un angle défini par l'indication de l'orientation préférée quand l'utilisateur est en position de lecture du dispositif, le récepteur est en mesure ainsi de rechercher et poursuivre un plus grand nombre de satellites visibles. De ce fait, il réduit le nombre de satellites visibles susceptibles d'être masqués par son corps en position de lecture du dispositif, et facilite la détermination de position du récepteur.

Avantageusement, le dispositif électronique est une montre-bracelet électromécanique à affichage de l'heure à l'aide d'aiguilles. Ainsi, l'unité de traitement est en mesure de configurer le récepteur de signaux radiofréquences, tel qu'un récepteur GPS, sur la base des données d'almanach et d'éphémérides, de données horaires et du signal d'orientation fourni par la boussole.

Dans un mode de détermination de position, quand le récepteur de signaux radiofréquences est enclenché, les aiguilles se superposent ou sont en opposition afin d'indiquer sur le cadran de montre l'orientation préférée pour que le récepteur capte un maximum de satellites visibles. Les aiguilles peuvent également être déplacées pour indiquer une plage dans laquelle se situe un maximum de satellites visibles susceptibles d'être cherchés et poursuivis.

Le récepteur de signaux radiofréquences peut être automatiquement configuré par l'unité de traitement en fonction de l'orientation prise par l'utilisateur en position de lecture du dispositif de manière à ne chercher et poursuivre que les satellites visibles qui ne sont pas masqués par le corps de l'utilisateur.

Avantageusement, une rotation ou changement d'orientation de l'utilisateur est détecté par l'unité de traitement sur la base d'un changement du signal d'orientation fourni par la boussole. En fonction de la rotation de l'utilisateur en position de lecture du dispositif, le récepteur peut être configuré ou reconfiguré automatiquement pour la recherche et la poursuite d'autres satellites visibles.

L'invention a également pour but de proposer un procédé de détermination de position à l'aide d'un dispositif électronique porté au poignet d'un utilisateur afin de pallier les inconvénients cités précédemment.

A cet effet, l'invention concerne un procédé de détermination de position à l'aide d'un dispositif électronique cité ci-devant, qui comprend les caractéristiques définies dans la revendication 9.

Des étapes particulières du procédé sont définies dans les revendications dépendantes 10 à 13.

Les buts, avantages et caractéristiques du dispositif électronique portable et du procédé de détermination de position à l'aide du dispositif électronique apparaîtront mieux dans la description suivante en regard des dessins sur lesquels :
- la figure 1 représente de manière simplifiée une vue de dessus d'un utilisateur portant un dispositif électronique selon l'invention en position de lecture dudit dispositif pour la détermination par exemple d'une position géographique, dont une partie des satellites visibles est masquée par son corps,
- la figure 2 représente une vue de dessus d'une montre-bracelet en tant que dispositif électronique portable selon l'invention, pour montrer au plan A le déplacement des aiguilles d'indication de l'heure à une position relative d'une orientation préférée, et au plan B le déplacement des aiguilles lors d'une rotation de l'utilisateur portant le dispositif,
- la figure 3 représente schématiquement une coupe partielle selon III-III de la montre-bracelet de la figure 2, et
- la figure 4 représente schématiquement différents blocs électroniques de la montre-bracelet en tant que dispositif électronique portable selon l'invention.

Dans la description suivante, il ne sera fait référence qu'à une montre-bracelet électromécanique en tant que dispositif électronique portable susceptible d'être porté au poignet d'un utilisateur. Plusieurs éléments de cette montre-bracelet, qui sont bien connus de l'homme du métier dans ce domaine technique, ne sont relatés que de manière simplifiée. Bien entendu, tout dispositif autre qu'une montre-bracelet peut être envisagé, tel qu'un bracelet avec composants électroniques, voire un téléphone portable pour autant qu'il soit possible de le porter au poignet ou de le tenir dans la main pendant les opérations de détermination d'une position géographique.

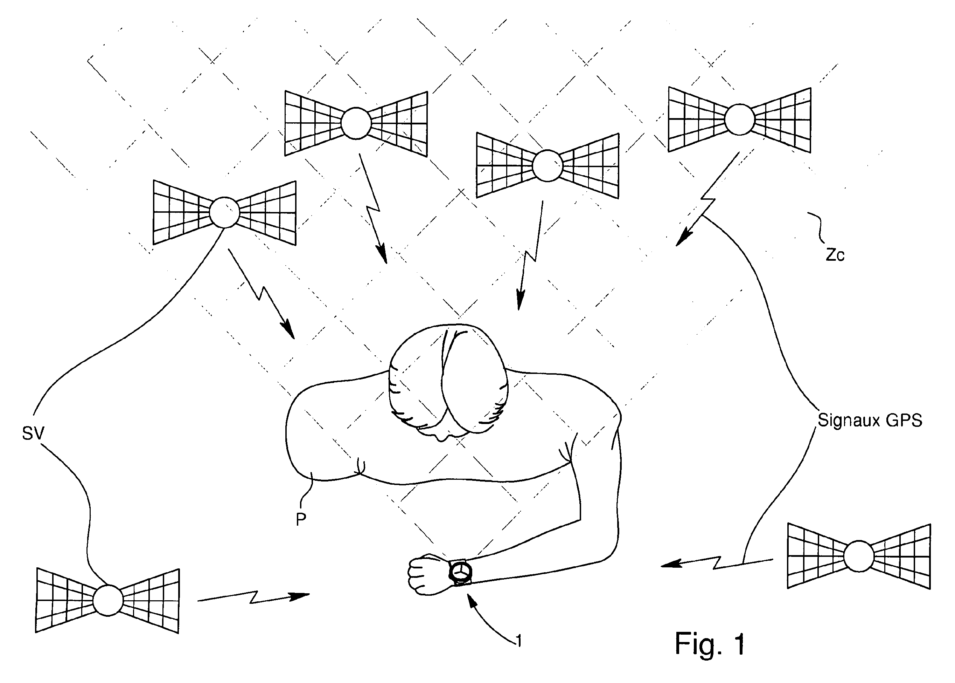

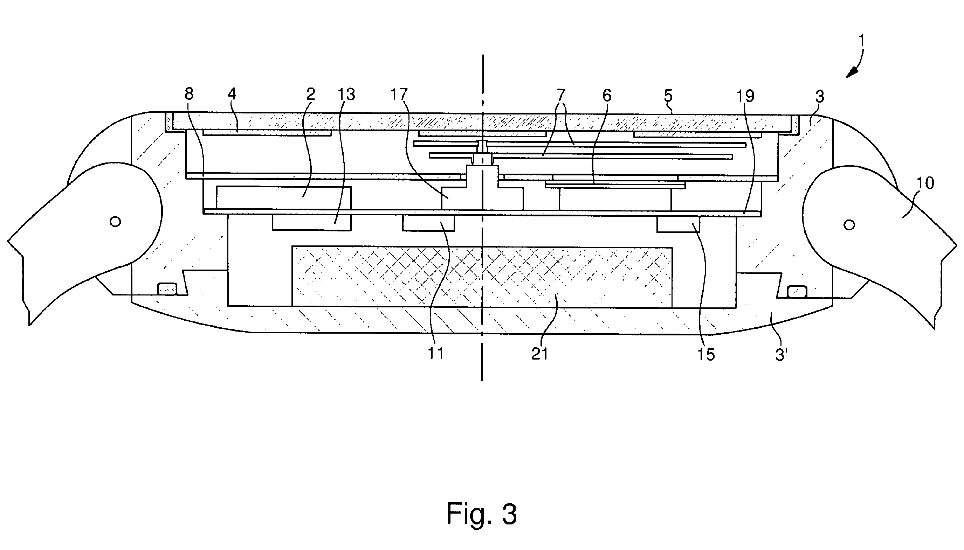

Comme montré à la figure 1 dans un mode de détermination de position, la montre-bracelet 1, qui comprend un récepteur de signaux radiofréquences notamment de type GPS et une boussole magnétique, est placée devant l'utilisateur P. Dans ce mode, la montre grâce au récepteur est en mesure de déterminer une position géographique, une vitesse, une altitude ou un cap. Dans cette position de lecture des informations fournies par la montre portée au poignet de l'utilisateur ou tenue à la main, le cadran de montre est disposé sensiblement horizontalement. Ceci permet notamment de placer l'axe de l'antenne du récepteur verticalement pour déterminer par exemple sa position géographique comme décrit ci-dessous en référence à la figure 3.

En plaçant sa montre devant lui, l'utilisateur masque une partie du champ de vision du système GPS. Une zone Zc, montrée hachurée, du champ de vision d'angle d'environ 90° depuis la montre, est masquée par le corps P de l'utilisateur. De ce fait, certains satellites visibles SV ayant par exemple une faible élévation et susceptibles de fournir des signaux GPS à capter par le récepteur sont masqués par le corps P de l'utilisateur.

Pour déterminer une position géographique, il est normalement nécessaire de pouvoir capter au moins trois satellites visibles. Sur la figure 1, il est montré que les signaux GPS d'uniquement deux satellites peuvent être captés par le récepteur du dispositif. De ce fait, l'utilisateur doit être informé par la montre d'une orientation préférée de sa montre par rapport à son corps pour être en mesure de capter les signaux GPS d'un nombre suffisant de satellites visibles.

Comme la montre comprend des moyens de mémorisation dans lesquels sont mémorisées des données d'almanach et d'éphémérides relatives aux satellites, et en connaissant la date, l'heure et la position approximative de l'utilisateur, la montre avec le récepteur est en mesure de déterminer la position relative des satellites GPS visibles susceptibles d'être captés. Le récepteur peut ainsi être configuré automatiquement par une unité de traitement à microprocesseur pour la recherche et la poursuite de satellites visibles SV non masqués par le corps de l'utilisateur.

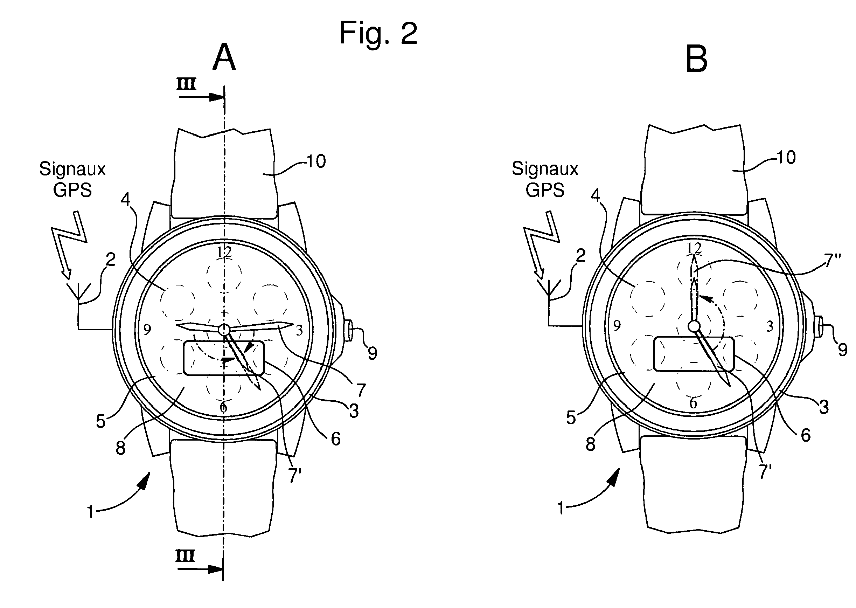

La figure 2 représente uniquement des vues de dessus de la montre électromécanique 1, qui est normalement portée au poignet d'un utilisateur non représenté dans une position de lecture d'informations de la montre.

La montre 1, qui comprend un bracelet 10, est du type analogique avec un cadran 8 et des aiguilles 7 d'indication de l'heure. La montre comprend également un mouvement horloger disposé sous le cadran 8 dans un boîtier 3 fermé par un verre 5, un module ou dispositif d'affichage à cristaux liquides 6 pour afficher des données ou des opérations à effectuer, des touches de commande 4 sur la face intérieure du verre et un bouton de commande 9 sur le boîtier. Le verre 5 est maintenu par une lunette ou par la partie supérieure de la carrure du boîtier 3. Une pile ou un accumulateur, non représenté, dans le boîtier 3 permet de fournir l'alimentation électrique aux composants électroniques de la montre.

Les touches de commande 4 sont de préférence des capteurs de type capacitif qui peuvent être activés chacun par un doigt d'un utilisateur ou un stylet, non représenté, posé dans une zone déterminée du capteur à activer. Au moins une plage sensible, de préférence transparente, constitue chaque capteur ou touche de commande.

La montre 1 comprend encore un récepteur de signaux radiofréquences, dont l'antenne 2 des moyens de réception et de mise en forme des signaux radiofréquences est représentée symboliquement, et une boussole magnétique pour assister le récepteur.

Dans un mode normal de fonctionnement, la montre-bracelet 1 est destinée à fournir une indication de l'heure par les aiguilles 7, voire également à l'aide du module d'affichage 6. Dans ce mode normal, le récepteur de signaux radiofréquences reste dans un mode de repos inactif par mesure d'économie d'énergie électrique.

Toutefois, pour la détermination d'une position géographique, le récepteur de signaux radiofréquences doit être enclenché. Pour ce faire, le bouton de commande 9 peut être manuellement pressé de manière brève ou pendant une durée définie afin d'entrer dans un mode de détermination de position. Dans ce mode de détermination de position, les touches de commande, contrôlées par l'unité de traitement, deviennent actives afin de pouvoir consulter sur le module d'affichage 6 différentes données de la montre, ainsi que des coordonnées calculées de position.

Il peut être prévu également que le bouton de commande 9 permette d'enclencher tout d'abord les touches de commande 4 afin que par l'action d'une ou plusieurs touches de commande, on sélectionne ensuite le mode de détermination de position en enclenchant le récepteur. Les touches de commande peuvent également être activées par le doigt d'un utilisateur pour la consultation de différents menus ou données mémorisées, ou pour l'exécution de différentes fonctions ou opérations de la montre.

Dès cet instant, lorsque la montre-bracelet est placée dans une position de lecture devant l'utilisateur comme montré à la figure 1, la boussole magnétique fournit un signal d'orientation à l'unité de traitement. Ce signal d'orientation permet à l'unité de traitement de connaître les satellites cachés par rapport au corps de l'utilisateur. Ainsi, grâce aux données horaires, au signal d'orientation et aux données mémorisées d'almanach et d'éphémérides des satellites, l'unité de traitement peut configurer automatiquement le récepteur pour la réception et la poursuite de satellites visibles non masqués par le corps de l'utilisateur.

Les aiguilles 7 dans ce mode de détermination de position constituent une partie des moyens d'indication de direction de la montre. Elles sont déplacées en rotation sur commande de l'unité de traitement pour se superposer comme montré en traits interrompus avec la référence 7' au plan A de la figure 2. La position 7' des aiguilles dans ce mode permet de fournir une indication de l'orientation préférée que doit adopter l'utilisateur pour capter le plus grand nombre de satellites visibles non masqués par son corps.

Comme sur cette figure 2 au plan A, les aiguilles superposées sont déplacées à proximité de l'indication 6h du cadran de montre, cela permet d'informer l'utilisateur qu'un grand nombre de satellites visibles susceptibles d'être captés par le récepteur de la montre est caché par son corps. Sans rotation de l'utilisateur, l'unité de traitement configure le récepteur pour capter uniquement les satellites visibles non masqués. Une détermination de position peut être ainsi calculée pour autant que les signaux GPS d'au moins trois satellites puissent être captés.

Bien entendu, il peut être concevable que les aiguilles 7 soient placées en opposition dans ce mode de détermination de position, ou qu'une seule aiguille soit déplacée. De plus, par l'action manuelle sur l'une ou l'autre des touches de commande 4, il peut être sélectionné qu'au moins une aiguille indique le Nord géographique ou la position d'un des satellites en orbite.

Pour pouvoir capter le maximum de satellites visibles lorsque l'utilisateur place sa montre devant lui en position de lecture des informations, il doit se tourner d'un angle correspondant à l'angle défini par les aiguilles en position référencée 7' et l'indication 12h du cadran de sa montre par exemple selon le plan B de la figure 2. Par cette rotation et le changement du signal d'orientation fourni par la boussole, les aiguilles superposées sont déplacées jusqu'à l'indication 12h du cadran montrées par la référence 7" en traits interrompus. Une fois que les aiguilles occupent la position de l'indication 12h, l'unité de traitement peut configurer automatiquement ou sur demande de l'utilisateur le récepteur pour la recherche et la poursuite des satellites visibles non masqués par son corps.

Il est à noter que l'unité de traitement détecte tout changement significatif d'orientation de l'utilisateur. De cette manière, l'unité peut reconfigurer le récepteur en opération pour la recherche et la poursuite d'autres satellites visibles. De plus, les moyens d'indication de direction comprennent également le module d'affichage 6, qui peut afficher des coordonnées de la position géographique ou de la position d'au moins un satellite ou toute autre information mémorisée dans les moyens de mémorisation de la montre.

La figure 3 représente schématiquement une coupe de la montre-bracelet 1 selon la ligne III-III de la figure 2. De manière à ne pas surcharger la représentation de la montre vue en coupe, uniquement les composants importants de la montre et leur placement dans le boîtier de la montre sont représentés.

La montre-bracelet 1 comprend notamment une unité de traitement à microprocesseur 11 programmée pour l'exécution de certaines fonctions personnalisées, par exemple pour le calcul de la position sur la base des données fournies par le récepteur 13. Le récepteur 13 comprend des moyens de réception par une antenne 2 et de mise en forme des signaux radiofréquences provenant de satellites, et plusieurs canaux de corrélation pour la recherche et la poursuite de plusieurs satellites visibles. Le nombre de canaux de corrélation est de préférence plus important que le nombre de satellites visibles, par exemple égal à 12 canaux.

L'unité à microprocesseur 11 comporte également certains blocs en relation avec la base de temps pour la commande d'un micromoteur 17 entraînant des aiguilles 7 d'indication de l'heure sur le cadran 8 de montre. Un étage oscillateur relié à un résonateur à quartz est disposé dans l'unité à microprocesseur 11 pour cadencer différentes opérations de la montre avec le récepteur de signaux radiofréquences 13.

La fréquence d'oscillation peut être de l'ordre de 4,03 MHz. Cette fréquence d'oscillation peut être également divisée de manière connue pour obtenir une fréquence d'horloge à 32'768 Hz afin de cadencer des fonctions horlogères. II peut également être prévu d'ajouter un autre résonateur à quartz pour un étage oscillateur à fréquence d'oscillation de 32'768 Hz destiné aux fonctions horlogères de la montre.

Le microprocesseur de l'unité 11 peut être par exemple le microprocesseur PUNCH à 8-bit ou le microprocesseur 8-bit CooIRISC-816 fabriqué par la société EM Microelectronic-Marin SA en Suisse.

La montre-bracelet 1 comporte encore dans le boîtier, qui est composé par la carrure 3 et le fond 3' monté de manière connue à la carrure 3, et qui est fermé par le verre 5, une boussole magnétique 15 reliée à une plaque à circuit imprimé 19. La boussole magnétique peut être une boussole mécanique ou une boussole basée sur le principe de détection de flux magnétique (Fluxgate). La boussole est disposée sur la plaque à circuit imprimé 19 du même côté que l'unité de traitement 11 et le récepteur 13 afin que l'unité de traitement puisse être électriquement reliée facilement à la boussole et au récepteur. Par contre l'antenne 2 du récepteur 13 est disposé sur un côté opposé de la plaque à circuit imprimé suffisamment éloignée de la boussole magnétique pour éviter toute perturbation des signaux entre les deux éléments. L'axe de l'antenne est sensiblement perpendiculaire à la plaque à circuit imprimé 19 qui est maintenue sur un rebord intérieur de la carrure 3 de montre en dessous du cadran 8.

La montre-bracelet 1 comprend également un accumulateur ou une batterie 21 de petite taille disposé sur le fond 3' du boîtier de montre pour l'alimentation électrique de tous les composants de la montre, un module ou dispositif d'affichage LCD 6 monté sur la plaque à circuit imprimé 19 de manière à apparaître à travers une ouverture du cadran. Le verre de montre 5 comprend sur une surface intérieure des plages sensibles transparentes 4 des touches de commande, qui sont reliées électriquement à l'unité de traitement 11.

Une fois que le bouton de commande, non représenté, est pressé par exemple, les touches de commande 4 de l'écran tactile peuvent être activées pour fournir des signaux à l'unité à microprocesseur 11. II peut être prévu par exemple 7 touches de commande dont les plages sensibles sont suffisamment espacées l'une de l'autre de manière à permettre à un doigt de l'utilisateur de les activer individuellement.

Dans un mode de détermination de position, les signaux provenant des touches 4 permettent par exemple de sélectionner différents menus ou données à visualiser sur le module d'affichage 6, ou à l'unité de traitement 11 de configurer le récepteur 13 pour la recherche et la poursuite de satellites visibles.

Pour des détails techniques complémentaires sur l'agencement des plages sensibles et les composants électroniques de la montre 1, le lecteur peut se référer au document EP 0 838 737 du même Demandeur et aux points 2 et 5 de la publication du 30 septembre 1999 lors du 64^{e} congrès de la Société Suisse de Chronométrie et intitulée "Montre altimètre-boussole présentant un nouveau concept d'utilisation" d'Asulab S.A. qui sont cités en référence.

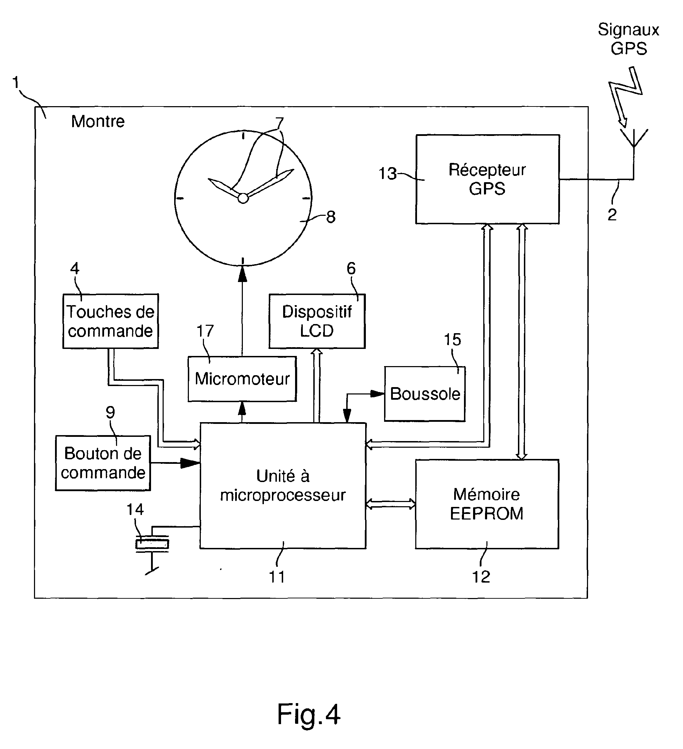

La figure 4 représente schématiquement les différents éléments électroniques de la montre-bracelet 1. II est à noter que tous les mêmes éléments de la montre-bracelet 1 décrits dans les figures 2 et 3 portent des signes de référence identiques. De ce fait par simplification, il ne sera pas répété en détail la description de chaque élément.

La montre-bracelet comprend donc une unité de traitement à microprocesseur 11, une boussole magnétique 15 reliée à l'unité de traitement à microprocesseur 11, un résonateur à quartz 14 d'un étage oscillateur de l'unité de traitement, un récepteur GPS 13 muni d'une antenne 2 de réception de signaux GPS et relié à l'unité de traitement, un dispositif d'affichage 6 commandé par l'unité de traitement. La montre 1 comprend encore un micromoteur 17 commandé par l'unité de traitement afin d'entraîner des aiguilles 7 sur un cadran 8 de montre, des touches de commande 4 et un bouton de commande 9 reliés à l'unité de traitement pour ordonner l'exécution de certaines fonctions.

Les moyens de mémorisation de la montre 1 sont constitués de préférence par une mémoire non-volatile EEPROM 12. Cette mémoire est reliée à l'unité de traitement 11 et également au récepteur 13 afin de pouvoir mémoriser des données transmises par l'unité ou le récepteur. La mémoire 12 peut fournir également des données mémorisées d'almanach et d'éphémérides relatives aux satellites. Ceci permet à l'unité à microprocesseur 11 sur la base d'un traitement de ces données d'almanachs avec des données horaires et du signal d'orientation de la boussole de déterminer les satellites visibles susceptibles d'être cherchés.

L'unité de traitement 11 commande le micromoteur 17 de manière que les aiguilles 7 indiquent une orientation préférée dans le mode de détermination de position. De plus, l'unité de traitement 11 configure le récepteur de signaux radiofréquences 13 pour que certains canaux de corrélation du récepteur soient en mesure de rechercher et poursuivre des satellites visibles non masqués par le corps de d'utilisateur.

Bien entendu, le récepteur de signaux radiofréquences GPS peut être réalisé comme le récepteur décrit notamment dans la demande de brevet EP 1 170 597 du même Demandeur. Dans ce cas, chaque canal de corrélation du récepteur peut comprendre un contrôleur pour l'exécution des opérations de recherche et de poursuite d'un satellite visible particulier, ainsi que d'autres moyens de mémorisation de données.

A la fin de toutes les étapes de détermination de position de la montre-bracelet, le récepteur est placé automatiquement dans un mode de repos après un laps de temps d'inactivité déterminé par économie d'énergie électrique.

A partir de la description qui vient d'être faite, de multiples variantes de réalisation du dispositif électronique portable et du procédé de détermination de position peuvent être conçues par l'homme du métier sans sortir du cadre de l'invention définie par les revendications. Le récepteur de signaux radiofréquences du dispositif peut servir également dans un système de navigation GLONASS ou GALILEO ou un autre système de navigation. De plus, les moyens d'indication de direction peuvent être constitués d'un dispositif sonore pour informer l'utilisateur d'une orientation préférée pour capter un grand nombre de satellites visibles non masqués. L'orientation préférée peut n'être indiquée que sur le module d'affichage du dispositif électronique. Dans une position déterminée de l'utilisateur, les canaux du récepteur configurés pour la recherche de satellites, qui sont masqués par le corps de l'utilisateur, sont déclenchés par économie d'énergie.

## Revendications

1. Dispositif électronique portable destiné à être porté au poignet d'un utilisateur, tel qu'une montre-bracelet (1), le dispositif comprenant un récepteur de signaux radiofréquences (13), qui comprend des moyens de réception (2) et de mise en forme des signaux radiofréquences provenant de satellites (SV) et plusieurs canaux de corrélation pour la recherche et la poursuite de plusieurs satellites visibles, une boussole magnétique (15), une unité de traitement de données à microprocesseur (11) pour traiter des données fournies par le récepteur et la boussole, et des moyens de mémorisation (12) dans lesquels sont mémorisées des données d'almanach et d'éphémérides relatives aux satellites, **caractérisé en ce que** la boussole est agencée pour fournir un signal d'orientation à l'unité de traitement de données, qui commande des moyens d'indication d'une direction (6, 7) pour indiquer une orientation préférée de recherche de satellites visibles à l'utilisateur en position de lecture du dispositif sur la base d'un traitement des données d'almanach et d'éphémérides, de données horaires et du signal d'orientation par l'unité de traitement.

2. Dispositif électronique portable selon la revendication 1, **caractérisé en ce que** l'unité de traitement est adaptée pour configurer automatiquement le récepteur sur la base du signal d'orientation de la boussole pour une recherche et poursuite de satellites visibles non masqués par le corps de l'utilisateur en position de lecture de données du dispositif.

3. Dispositif électronique portable selon la revendication 1, **caractérisé en ce que** l'unité de traitement est adaptée pour détecter un changement du signal d'orientation fourni par la boussole de manière à configurer ou modifier la configuration du récepteur pour une recherche et poursuite de satellites visibles non masqués par le corps de l'utilisateur fonction du changement du signal d'orientation.

4. Dispositif électronique portable selon la revendication 1, **caractérisé en ce que** la boussole (15) est du type à détecteur de flux magnétique.

5. Dispositif électronique portable en tant que montre-bracelet électro-mécanique à affichage de l'heure par des aiguilles (7) selon la revendication 1, **caractérisé en ce que** dans un mode de détermination d'une position, les moyens d'indication d'une direction sont constitués par au moins une des aiguilles d'indication de l'heure du dispositif qui est déplacée pour indiquer l'orientation préférée de recherche de satellites visibles par le récepteur.

6. Dispositif électronique portable selon la revendication 5, **caractérisé en ce que** dans le mode de détermination d'une position, deux aiguilles (7) d'indication de l'heure sont commandées par l'unité de traitement (11) pour se superposer ou être en opposition pour indiquer une orientation préférée, ou pour indiquer la direction d'un satellite ou le Nord géographique.

7. Dispositif électronique portable selon l'une des revendications 5 et 6, **caractérisé en ce que** les moyens d'indication d'une direction comprennent un module d'affichage à cristaux liquides (6) commandé par l'unité de traitement afin d'afficher différentes données relatives notamment à l'orientation ou au positionnement dans un mode de détermination d'une position, et **en ce que** le dispositif comprend un bouton de commande (9), qui peut être manuellement activé pour passer d'un mode d'affichage de l'heure dans un mode de détermination d'une position.

8. Dispositif électronique portable selon l'une des revendications 1 et 7, **caractérisé en ce que** des touches tactiles (4) sont disposées sur un verre de montre (5) pour la commande de différentes fonctions du dispositif dans un mode de détermination de position, lesdites touches tactiles étant commandées par l'unité de traitement.

9. Procédé de détermination d'une position à l'aide d'un dispositif électronique porté au poignet d'un utilisateur, le dispositif comprenant un récepteur de signaux radiofréquences (13), qui comprend des moyens de réception (2) et de mise en forme des signaux radiofréquences provenant de satellites (SV) et plusieurs canaux de corrélation pour la recherche et la poursuite de plusieurs satellites visibles, une boussole magnétique (15), une unité de traitement de données à microprocesseur (11) pour traiter des données fournies par le récepteur et la boussole, et des moyens de mémorisation (12) dans lesquels sont mémorisées des données d'almanach et d'éphémérides relatives aux satellites, ledit procédé étant **caractérisé en ce qu'**il comprend des étapes consistant à :
- fournir un signal d'orientation de la boussole à l'unité de traitement,
- traiter le signal d'orientation dans l'unité de traitement avec des données d'almanach et d'éphémérides des moyens de mémorisation, et des données horaires, et
- indiquer sur des moyens d'indication d'une direction, qui sont commandés par l'unité de traitement, une orientation préférée de recherche de satellites visibles à l'utilisateur en position de lecture du dispositif sur la base des données traitées par l'unité de traitement.

10. Procédé selon la revendication 9, **caractérisé en ce qu'**il comprend une étape consistant à configurer automatiquement le récepteur de signaux radiofréquences (13) par l'unité de traitement sur la base du signal d'orientation fourni par la boussole, afin que le récepteur soit en mesure de rechercher et poursuivre des satellites visibles non masqués par le corps de l'utilisateur en position de lecture de données du dispositif.

11. Procédé selon la revendication 9, **caractérisé en ce qu'**une détection d'un changement d'orientation du dispositif porté par l'utilisateur est effectuée par l'unité de traitement sur la base d'un changement du signal d'orientation fourni par la boussole, de manière à configurer ou modifier la configuration du récepteur pour une recherche et poursuite de satellites visibles non masqués par le corps de l'utilisateur.

12. Procédé selon la revendication 9, pour lequel le dispositif est une montre-bracelet électro-mécanique à affichage de l'heure par des aiguilles (7), **caractérisé en ce que** lorsqu'un mode de détermination d'une position est sélectionné par l'action sur un bouton de commande (9) du dispositif, les aiguilles des moyens d'indication d'une direction sont déplacées pour indiquer l'orientation préférée de recherche de satellites visibles par le récepteur.

13. Procédé selon la revendication 12, **caractérisé en ce que** dans le mode de détermination d'une position, les aiguilles se superposent ou sont en opposition pour indiquer l'orientation préférée, et **en ce que** le dispositif porté par l'utilisateur est tourné d'un angle déterminé correspondant à l'orientation préférée afin d'amener au moins une des aiguilles sur une indication 12h d'un cadran de montre afin que l'unité de traitement configure le récepteur pour rechercher et poursuivre un nombre maximum de satellites visibles.

## Claims

1. Portable electronic device to be worn on a user's wrist, such as a wristwatch (1), said device including a radiofrequency signal receiver (13), which includes means (2) for receiving and shaping radiofrequency signals from satellites (SV) and several correlation channels for searching for and tracking several visible satellites, a magnetic compass (15), a microprocessor data processing unit (11) for processing data provided by the receiver and the compass, and storage means (12) in which the almanac and ephemeredes data relating to the satellites is stored, **characterized in that** the compass is arranged for providing an orientation signal to the data processing unit, which controls means for indicating a direction (6, 7) for indicating to the user a preferred orientation for searching for visible satellites when the device is in the reading position on the basis of processing of the almanac and ephemeredes data, time data and the orientation signal by the processing unit.

2. Portable electronic device according to claim 1, **characterized in that** the processing unit is adapted to automatically configure the receiver on the basis of the orientation signal from the compass for searching for and tracking visible satellites that are not concealed by the user's body in the data reading position of the device.

3. Portable electronic device according to claim 1, **characterized in that** the processing unit is adapted to detect a change in the orientation signal provided by the compass so as to configure or alter the configuration of the receiver for searching for and tracking visible satellites that are not concealed by the user's body as a function of the change in the orientation signal.

4. Portable electronic device according to claim 1, **characterized in that** the compass (15) is of the type with a magnetic flux detector.

5. Portable electronic device as an electromechanical wristwatch with a time display using hands (7) according to claim 1, **characterized in that** in a position determining mode, the means for indicating a direction are formed by at least one of the time indicating hands of the device which is moved to indicate the preferred orientation for the receiver to search for visible satellites.

6. Portable electronic device according to claim 5, **characterized in that** in the position determining mode, two time indicating hands (7) are controlled by the processing unit (11) to superpose each other or to be in opposition to indicate a preferred orientation, or to indicate the direction of a satellite or geographical north.

7. Portable electronic device according to claims 5 or 6, **characterized in that** the direction indicating means include a liquid crystal display module (6) controlled by the processing unit in order to display various data relating in particular to orientation or positioning in a position determining mode, and **in that** the device includes a control button (9), which can be activated manually to pass from a time display mode into a position determining mode.

8. Portable electronic device according to any of claims 1 and 7, **characterized in that** touch type keys (4) are arranged on a watch glass (5) for controlling the various functions of the device in a position determining mode, said touch type keys being controlled by the processing unit.

9. Method for determining a position using an electronic device worn on a user's wrist, the device including a radiofrequency receiver (13), which includes means (2) for receiving and shaping radiofrequency signals from satellites (SV) and several correlation channels for searching for and tracking visible satellites, a magnetic compass (15), a microprocessor data processing unit (11) for processing data provided by the receiver and the compass, and storage means (12) in which almanac and ephemeredes data relating to satellites is stored, said method being **characterized in that** it includes steps of:
- providing an orientation signal from the compass to the processing unit,
- processing the orientation signal in the processing unit with the almanac and ephemeredes data of the storage means, and time data, and
- indicating on direction indicating means, which are controlled by the processing unit, a preferred orientation for searching for satellites visible to the user when the device is in the reading position on the basis of the data processed by the processing unit.

10. Method according to claim 9, **characterized in that** it includes a step consisting in automatically configuring the radiofrequency signal receiver (13) via the processing unit on the basis of the orientation signal provided by the compass, so that the receiver is able to search for and track visible satellites that are not concealed by the user's body when the device is in the data reading position.

11. Method according to claim 9, **characterized in that** the processing unit detects a change in orientation of the device worn by the user on the basis of a change in the orientation signal provided by the compass, so as to configure or alter the configuration of the receiver for searching for and tracking visible satellites that are not concealed by the user's body.

12. Method according to claim 9 wherein said device is an electromechanical wristwatch with a time display using hands (7), **characterised in that** when a position determinating mode is selected by actuating a control button (9) of the device, the hands for indicating a direction are moved to indicate the preferred orientation for the receiver to search for visible satellites.

13. Method according to claim 12, **characterized in that** in the position determining mode, the hands are superposed or in opposition to indicate the preferred orientation, and **in that** the device worn by the user is rotated at a determined angle corresponding to the preferred orientation in order to bring at least one of the hands to the 12 o'clock indication of a watch dial so that the processing unit configures the receiver to search for and track a maximum number of visible satellites.

## Patentansprüche

1. Elektronische tragbare Vorrichtung, welche dazu bestimmt ist, am Handgelenk eines Benutzers getragen zu werden, beispielsweise eine Armbanduhr (1), wobei die Vorrichtung einen Empfänger für Funksignale (13) mit Empfangsmitteln (2), Mitteln zum Umformen von von Satelliten (SV) stammenden Funksignalen und mehreren Korrelationskanälen zum Suchen und Verfolgen von mehreren sichtbaren Satelliten, einen Magnetkompass (15), eine Datenverarbeitungseinheit mit Mikroprozessor (11) zum Verarbeiten der von dem Empfänger und dem Kompass gelieferten Signale und Speichermittel (12) umfasst, in denen Almanach- und Ephemeridendaten bezüglich der Satelliten gespeichert sind, **dadurch gekennzeichnet, dass** der Kompass geeignet ausgebildet ist, um ein Orientierungssignal an die Datenverarbeitungseinheit zu liefern, welche Mittel zum Angeben einer Richtung (6, 7) steuert, um eine bevorzugte Richtung für die Suche nach in einer Leseposition der Vorrichtung für den Benutzer sichtbaren Satelliten anzugeben, und zwar auf der Basis einer Verarbeitung von Almanach- und Ephemeridendaten, Zeitdaten und dem Orientierungssignal durch die Verarbeitungseinheit.

2. Elektronische tragbare Vorrichtung nach Anspruch 1, **dadurch gekennzeichnet, dass** die Datenverarbeitungseinheit geeignet ausgebildet ist, um den Empfänger auf der Basis des Orientierungssignals des Kompasses automatisch für eine Suche und Verfolgung von sichtbaren Satelliten zu konfigurieren, welche in einer Position zum Lesen von Daten der Vorrichtung nicht von dem Körper des Benutzers verdeckt sind.

3. Tragbare elektronische Vorrichtung nach Anspruch 1, **dadurch gekennzeichnet, dass** die Datenverarbeitungseinheit geeignet ausgebildet ist, um eine Veränderung des von dem Kompass gelieferten Orientierungssignals zu erkennen, um für eine Suche und Verfolgung von von dem Körper des Benutzers nicht verdeckten sichtbaren Satelliten in Abhängigkeit von einer Veränderung des Orientierungssignals den Empfänger zu konfigurieren oder seine Konfiguration zu verändern.

4. Elektronische tragbare Vorrichtung nach Anspruch 1, **dadurch gekennzeichnet, dass** der Kompass (15) ein Kompass mit einem Detektor eines magnetischen Flusses ist.

5. Elektronische tragbare Vorrichtung als elektromechanische Armbanduhr mit Zeitanzeige über Zeiger (7) gemäss Anspruch 1, **dadurch gekennzeichnet, dass** die Mittel zum Anzeigen einer Richtung in einem Positionsbestimmungsmodus von wenigstens einem der Zeiger zum Anzeigen der Zeit der Vorrichtung gebildet sind, der bewegt wird, um die bevorzugte Ausrichtung zur Suche nach für den Empfänger sichtbaren Satelliten anzuzeigen.

6. Tragbare elektronische Vorrichtung nach Anspruch 5, **dadurch gekennzeichnet, dass** in dem Positionsbestimmungsmodus zwei Zeiger (7) zum Anzeigen der Uhrzeit von einer Verarbeitungseinheit (11) gesteuert werden, um sich zu überlagern oder in einander entgegen gesetzte Richtungen zu weisen, um eine bevorzugte Ausrichtung anzuzeigen, oder um die Richtung eines Satelliten oder den geographischen Nordpol anzuzeigen.

7. Tragbare elektronische Vorrichtung an Anspruch 5 oder 6, **dadurch gekennzeichnet, dass** die Mittel zum Anzeigen einer Richtung ein Anzeigemodul mit Flüssigkristallen (6) umfassen, welches von der Datenverarbeitungseinheit angesteuert wird, um unterschiedliche Daten anzuzeigen, welche insbesondere die Orientierung oder die Positionierung in einem Positionsstimmungsmodus betreffen, und dass die Vorrichtung einen Bedienknopf (9) umfasst, der manuell aktiviert werden kann, um von einem Uhrzeitanzeigemodus in einen Positionsbestimmungsmodus umzuschalten.

8. Tragbare elektronische Vorrichtung nach Anspruch 1 oder 7, **dadurch gekennzeichnet, dass** zur Steuerung von unterschiedlichen Funktionen der Vorrichtung in einem Positions-bestimmungsmodus Berührtasten (4) auf einem Uhrglas (5) angeordnet sind, wobei die Berührtasten von der Datenerarbeitungseinheit gesteuert sind.

9. Verfahren zum Bestimmen einer Position mit Hilfe einer am Handgelenk eines Benutzers getragenen elektronischen Vorrichtung, wobei die Vorrichtung einen Empfänger von Funksignalen (13) mit Empfangsmitteln (2), Mitteln zum Umformen von von Satelliten (SV) stammenden Funksignalen und mehreren Korrelationskanälen zum Suchen und Verfolgen von mehreren sichtbaren Satelliten, einen Magnetkompass (15), eine Datenverarbeitungseinheit mit Mikroprozessor (11) zum Verarbeiten von von dem Empfänger und dem Kompass gelieferten Daten, und Speichermittel (12) umfasst, in denen Almanach- und Ephemeridendaten bezüglich der Satelliten gespeichert sind, wobei das Verfahren **dadurch gekennzeichnet ist, dass** es die folgenden Schritte umfasst:
- der Datenverarbeitungseinheit ein Orientierungssignal von dem Kompass zur Verfügung stellen,
- das Orientierungssignal in der Datenverarbeitungseinheit mit den Almanach- und Ephemeridendaten der Speichermittel und mit Uhrzeitdaten verarbeiten, und
- auf Mitteln zum Angeben einer Richtung, die von der Datenerarbeitungseinheit gesteuert sind, auf Basis der von der Verarbeitungseinheit verarbeiteten Daten eine bevorzugte Richtung zum Suchen von in einer Leseposition der Vorrichtung für den Benutzer sichtbaren Satelliten anzugeben.

10. Verfahren nach Anspruch 9, **dadurch gekennzeichnet, dass** es einen Schritt umfasst, welcher darin besteht, den Empfänger von Funksignalen (13) durch die Datenverarbeitungseinheit auf der Basis des von dem Kompass gelieferten Orientierungssignals automatisch zu konfigurieren, damit der Empfänger in der Lage ist, sichtbare Satelliten zu suchen und zu verfolgen, die in einer Position zum Lesen der Daten der Vorrichtung nicht von dem Körper des Benutzers verdeckt sind.

11. Verfahren nach Anspruch 9, **dadurch gekennzeichnet, dass** von der Datenverarbeitungseinheit auf der Basis einer Veränderung des von dem Kompass gelieferten Orientierungssignals eine Erkennung einer Änderung der Orientierung der von dem Benutzer getragenen Vorrichtung durchgeführt wird, um für eine Suche und Verfolgung von von dem Körper des Benutzers nicht verdeckten sichtbaren Satelliten den Empfänger zu konfigurieren oder seine Konfiguration zu verändern.

12. Verfahren nach Anspruch 9, bei dem die Vorrichtung eine elektromechanische Armbanduhr mit einer Anzeige der Uhrzeit durch Zeiger (7) ist, **dadurch gekennzeichnet, dass**, wenn ein Positionsbestimmungs-modus durch ein Einwirken auf einen Bedienknopf (9) der Vorrichtung ausgewählt ist, die Zeiger der Mittel zum Anzeigen einer Richtung bewegt werden, um die bevorzugte Ausrichtung zur Suche nach sichtbaren Satelliten durch den Empfänger anzuzeigen.

13. Verfahren nach Anspruch 12, **dadurch gekennzeichnet, dass** in dem Positionsbestimmungsmodus die Zeiger sich überlagern oder in einander entgegen gesetzte Richtungen weisen, um die bevorzugte Ausrichtung anzugeben, und dass die von dem Benutzer getragene Vorrichtung um einen vorbestimmten Winkel gedreht wird, welcher einer bevorzugten Ausrichtung entspricht, um wenigstens einen der Zeiger auf eine 12-Uhr-Anzeige eines Zifferblatts einer Uhr zu bewegen, damit die Datenverarbeitungseinheit den Empfänger konfiguriert, um eine maximale Anzahl von sichtbaren Satelliten zu suchen und zu verfolgen.
